# EUROPEAN PATENT SPECIFICATION

(11) **EP 2 203 233 B1**
(45) Date of publication and mention of the grant of the patent: **13.04.2011**
(21) Application number: 07849700.5
(22) Date of filing: 19.10.2007
(51) Int. Cl.: B01D 35/147, B01D 29/11, F15B 21/04

(54) **DEVICE FOR FILTERING PRESSURIZED OIL**
VORRICHTUNG ZUM FILTERN VON DRUCKBEAUFSCHLAGTEM ÖL
DISPOSITIF POUR FILTRER DE L'HUILE SOUS PRESSION

(43) Date of publication of application: 07.07.2010
(73) Proprietor: MP Filtri S.P.A., 20060 Pessano con Bornago (IT)
(72) Inventor: GIARELLI, Giovanni, I-20060 Pessano con Bornago (IT)
(74) Representative: Leihkauf, Steffen Falk
(86) International application number: PCT/IT2007/000731
(87) International publication number: WO 2009/050752

(56) References cited:
- DE-A1- 10 113 179
- DE-C1- 3 641 331
- US-A- 4 038 189
- US-B1- 6 217 755
- US-B1- 6 733 666

## Description

The object of the present invention is a device for filtering pressurized oil circulating in a oil-hydraulic circuit for operating one or more actuators, such as of an operating machine.

The known filtering devices comprises an inlet port and an outlet port for the oil. The known devices further comprise a main filter and a secondary filter, as well as a main valve assembly and a by-pass valve, which are accommodated within a housing. Under normal working conditions, the oil enters the device through the inlet port, flows through the main filter and secondary filter and flows out filtered through the outlet port.

With reference to the oil flowing direction described herein, the inlet of the main valve assembly is fluidically arranged downstream of the main filter and upstream of the secondary filter, whereas the outlet thereof is fluidically connected to an auxiliary or discharge port, for discharge, for example, into an oil tank. The main valve assembly has the function of restoring the normal work conditions in the event that abnormalities occur to oil pressure. The main valve assembly, in fact, comprises a pressurization valve, which is set such as to open, and thus allowing the oil to be discharged to the tank, in the event of pressure peaks within the circuit, which are due, for example, to accidental blockage or jamming of the actuators of the operating machine, which are operated by the pressurized oil.

The main valve assembly further comprises an anticavitation valve, which opens in the event that excessive depressions occur within the chamber where the filter is housed, such that further oil is taken from the tank by means of the auxiliary or discharge port.

The by-pass valve fluidically connects the inlet port to a by-pass port, the latter being also connected to the oil tank, and is set such as to open when the oil pressure is above a certain pressure threshold value, typically due to a filter blockage, and such as to drain the excess oil which cannot flow through the filter within the tank.

The main valve assembly and by-pass valve are arranged besides each other on the two opposite sides of the housing, respectively, such as to occupy portions thereof having substantially equal volumes. In order to maximize the respective fluid flow openings, the main valve assembly and by-pass valve are both offset relative to the main filter.

An exemplary filtering device according to the prior art is for example disclosed in US 6,733,666. US 4,038,189 discloses an oil filter having a plurality of bypass valves in parallel relationship.

These known filtering devices, however, are not without drawbacks.

In the abnormal situations described above, in which the main valve assembly or by-pass valve are opened, in order to pass through latter, the oil is forced to follow a tortuous path with consequent pressure losses and heating of the oil, which event is particularly undesired within the oil circuits as the latter is altered in the physical characteristics thereof as the temperature increases.

Furthermore, in the event of jamming or failure of the by-pass valve, the oil can no longer be discharged to the tank when the main filter is obstructed. This is a particularly usual situation because the by-pass valve has exactly the function of being passed through by the oil when the latter has not been filtered by the filter and is thus particularly contaminated. Even in the absence of failure, the presence of oil impurities can, however, cause the by-pass valve delayed opening.

The object of the present invention is thus to provide a filtering device, which at the same size as known filtering devices is capable of ensuring a much readier response in abnormal conditions, particularly in the condition where the main filter is obstructed, and which generally ensures an improved reliability.

These and other objects are achieved by means of a filtering device according to claim 1.

In order to better understand the invention and appreciating the advantages thereof, several non-limiting exemplary embodiments thereof will be described below, with reference to the annexed figures, in which:

Fig. 1 illustrates a diagram of a possible system in which a filtering device according to the invention can be inserted;

Fig. 2 illustrates a circuit diagram of a filtering device according to an embodiment of the invention;

Fig. 3 is a side schematic view of a filtering device according to an embodiment of the invention;

Fig. 4 is a schematic sectional view of the filtering device in Fig. 3;

Fig. 5 is a sectional schematic view of a detail of the filtering device in Fig. 4, according to a different sectional plane;

Fig. 6 is a schematic sectional view of the filtering device in Fig. 4 in a particular condition of use;

Fig. 7 is a schematic sectional view of the detail of the filtering device in Fig. 5 in a further condition of use;

Fig. 8a and 8b are schematic sectional views of the filtering device in Fig. 4 and a detail thereof in a further condition of use;

Fig. 9 is a sectional schematic view of the filtering device in Fig. 4 in a further condition of use;

Fig. 10a-10f are schematic transversal views of relative arrangements of several components of the filtering device according to several possible embodiments of the invention.

With reference to the annexed figures, a device for filtering pressurized oil is generally designated with numeral 1.

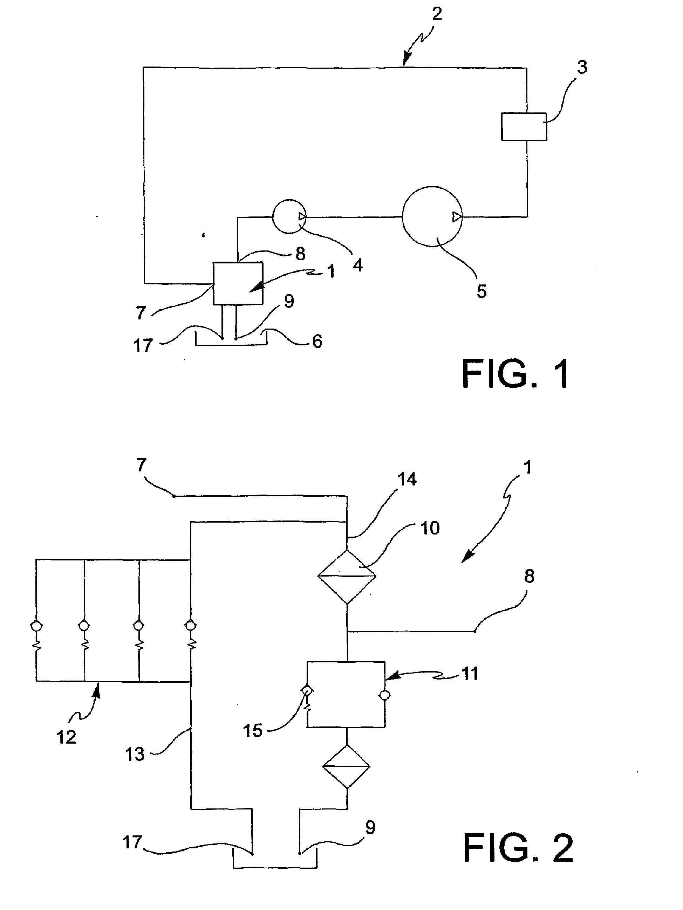

With reference to Fig. 1 and 2, the device 1 is suitable to be inserted within a oil-hydraulic circuit 2 in which the pressurized oil is circulated to be conveyed to one or more actuators 3, for example of an operating machine, such as to operate the latter. The oil pressurization can be carried out by means of one or more pumps, for example a first pump 4 that provides a first low-pressure stage and a second pump 5 that provides a second high-pressure stage. The oil circulating within the oil-hydraulic circuit 2 can be accumulated within suitable accumulation means and taken when required, for example in a tank 6. The filtering device 1 has the function of at least partially eliminating the impurities building up in the oil following the repeated use of the same and the repeated recirculation of the same within the oil-hydraulic circuit such as to avoid damaging the components thereof. The device 1 further has the function of remedying to abnormal conditions that can result in pressure peaks or depressions of the oil, according to modes that will be detailed below.

The device 1 comprises at least one inlet port 7 for the oil flowing from the actuators 3 to enter the device and at least one outlet port 8 for the filtered oil intended to reach the actuators 3 to exit. The inlet port 7 is intended to be connected to a return line of the oil-hydraulic circuit 2, which connects the actuators 3 and device 1, and the outlet port 8 is intended to be connected to a suction line of the oil-hydraulic circuit 2, for example connecting the device 1 and first pump 4. The device 1 then comprises at least one auxiliary or discharge port 9 and one or more by-pass ports 17 having the function of fluidically communicating the device 1 with the accumulation means, for example with the tank 6.

The device 1 further comprises a main filter 10 suitable to filter the oil flowing from the inlet port 7 and directed to the outlet port 8.

The filtering device 1 then comprises a main valve assembly 11 that is fluidically arranged between the main filter 10 and the auxiliary or discharge port 9. Advantageously, the main valve assembly 11 comprises a pressurization valve 15 that is shaped such as to prevent the oil flowing from the main filter 10 to the auxiliary or discharge port 9 when the oil, in the tract between the main filter 10 and the pressurization valve 15 and proximate thereto, is at a lower pressure than a threshold pressure value of pressurization valve Pᵥₚ and such as to allow the oil to flow therein when the oil, in the same position, is at a higher pressure than the threshold pressure valve of the pressurization valve Pᵥₚ. Thereby, in the normal operating conditions of the device 1, the filtered oil is conveyed from the main filter 10 to the outlet port 8, from where it can be sent to the oil-hydraulic circuit 2. In case of oil pressure peaks higher than the threshold pressure value of pressurization valve Pᵥₚ, the pressurization valve 15 opens, thus allowing the oil to be discharged in the tank 6 through the auxiliary or discharge port 9.

Further advantageously, the main valve assembly 11 further comprises an anticavitation valve 16 that is shaped such as to prevent the oil from flowing from the main filter 10 to the auxiliary or discharge port 9 when the oil, in the tract between the main filter 10 and the anticavitation valve 16 and proximate thereto, is at a higher pressure than a threshold pressure value of anticavitation valve P_{vac} and such as to allow the oil to flow from the auxiliary or discharge port 9 to the outlet port 8 when the oil, in the same position is at a pressure lower than the threshold pressure value of pressurization valve P_{vac}. The anticavitation valve 16 has the function of compensating any depressions of the oil, which are due, for example, to the pumping action by the first pump 4. In these conditions, the anticavitation valve opens and thus allows the oil to flow from the tank 6, from which it is taken through the auxiliary or discharge port 9, to the outlet passage 8. Under normal pressure conditions, i.e. above the threshold pressure value of anticavitation valve, on the contrary, the anticavitation valve 16 remains closed and does not allow the oil to flow from the main filter 10 to the auxiliary or discharge port 9.

The device 1 comprises a plurality of by-pass valves 12 which are fluidically arranged between the inlet port 7 and the by-pass ports 17, such as a by-pass line 13. Advantageously, the by-pass valves 12 are shaped such as to prevent the oil from flowing from the inlet port 7 to the by-pass ports 17, particularly along the by-pass line 13, when the oil, in the tract between the inlet port 7 and the by-pass valves 12 and proximate thereto, is at a pressure value lower than a threshold pressure value of by-pass valve P_{vbp} and such as to allow the oil to flow when the oil is at a higher pressure than the threshold pressure value of by-pass valve P_{vbp}. Thereby, in the event of obstruction of the main filter 10, and accordingly a pressure increase of the oil directed from the inlet port 7 to the main filter 10, the by-pass valves 12 can be opened by discharging the excess oil into the tank 6, through the by-pass ports 17.

The provision of the plurality of by-pass valves 12 ensures a much ready response by the filter to pressure peaks that are due to clogging of the main filter 10. Furthermore, also in the event of damage or breakage of one of the by-pass valves 12, for example due to the impurities carried by the oil, the discharge to the tank 6 of the oil rejected by the main filter 10 is ensured by the remaining intact by-pass valves 12.

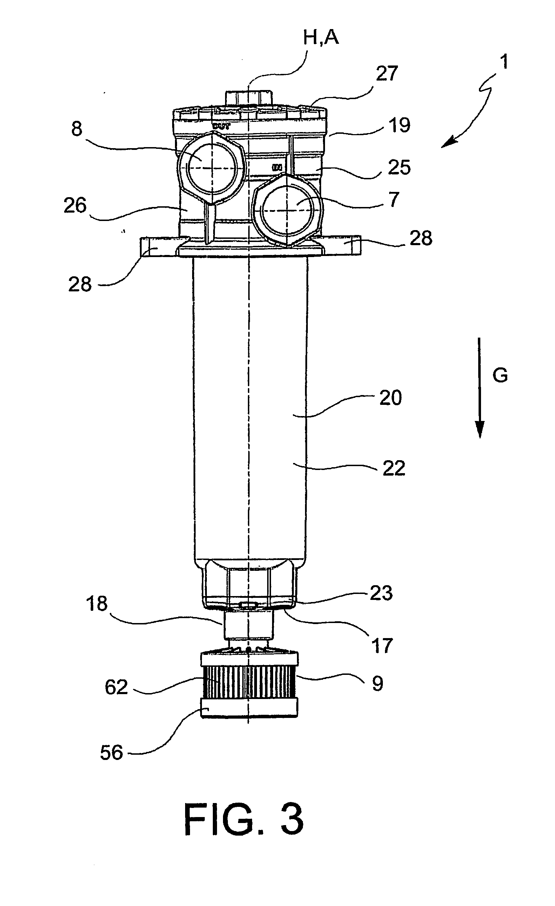

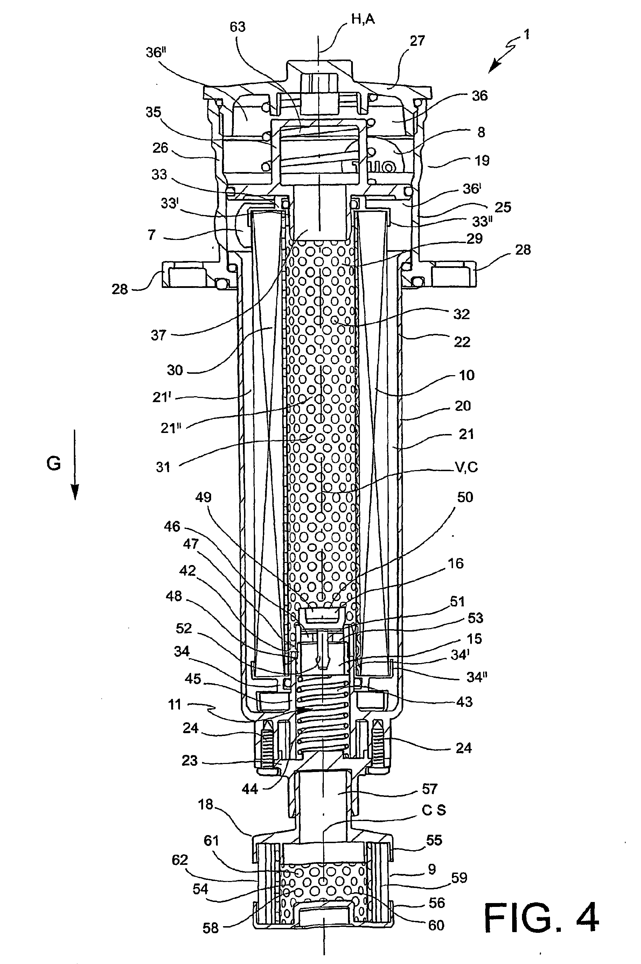

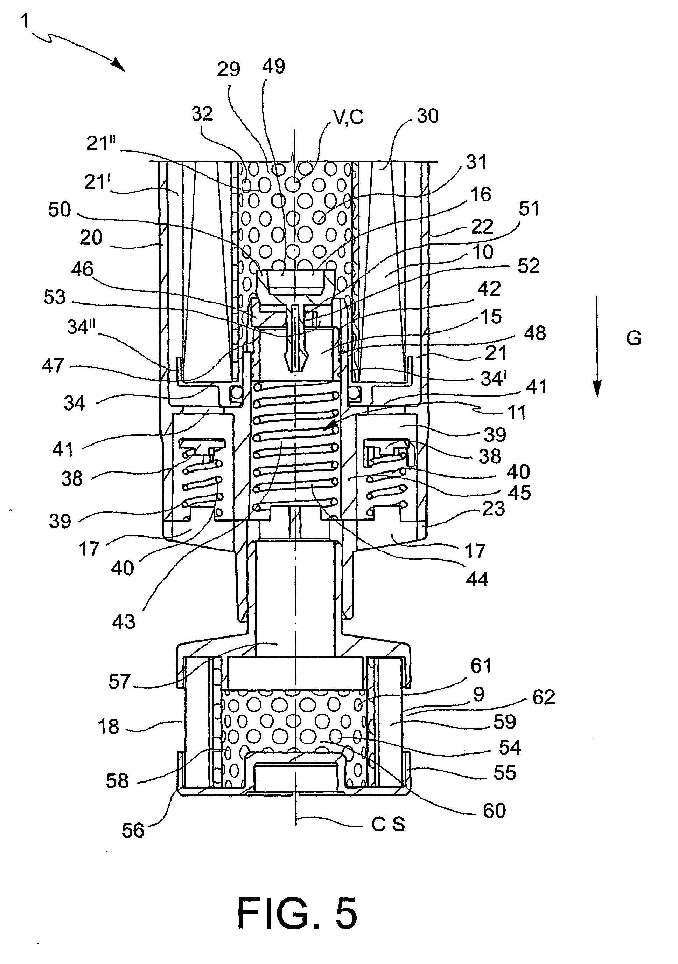

With reference now to Fig. 3 to 5, the device 1 axially develops according to a device axis of development A and radially about this device axis of development A. In the present description and claims annexed thereto, the terms "axial", "axially", "radial", "radially", or other similar terms are referred to the device development axis A.

Advantageously, the by-pass valves 12 are radially arranged about the main valve assembly 11. This particular relative arrangement of the main valve assembly 11 and by-pass valves 12 results in the general overall dimensions of the device at the housing area of the main valve assembly 11 and by-pass valves 12 being maintained small and comparable with those of known devices. This characteristic is particularly advantageous as the filtering devices are usually inserted within the oil-hydraulic circuit 2 by means of suitable containment seats (not shown in the figures) of a standard type, which are previously arranged for filtering devices of different types, and thus do not require to be modified, either in the shape or size thereof.

It should be noted that the expression "radially arranged" does not set any restriction per se on the relative axial arrangement of the main valve assembly 11 and the by-pass valves 12, but only on the radial arrangement thereof relative to the device development axis A. As will be detailed below, the main valve assembly 11 and the by-pass valves 12 are preferably, though not necessarily arranged substantially at the same level, preferably lower than the device 1. In the present description and annexed claims, the terms "lower side" and "upper side", or similar terms such as "low" "up", are conventionally referred to the normal conditions of use of the device, in which with reference to the gravity acceleration vector G (or a vertical component thereof), meant as the vector going from the top (upper) downwards (lower), the lower side is the one being intended to be dipped or exchange oil with the accumulation means by means of the auxiliary or discharge port 9, and the upper side is the side opposite the lower side. With reference to the annexed figures, in which the reference component of the gravity acceleration G is illustrated, the side taken as the lower side of the device 1 is designated with numeral 18, whereas the side taken as the upper side is designated with numeral 19.

In the radial direction, the main valve assembly 11 and by-pass valves 12 can be relatively arranged according to various configurations.

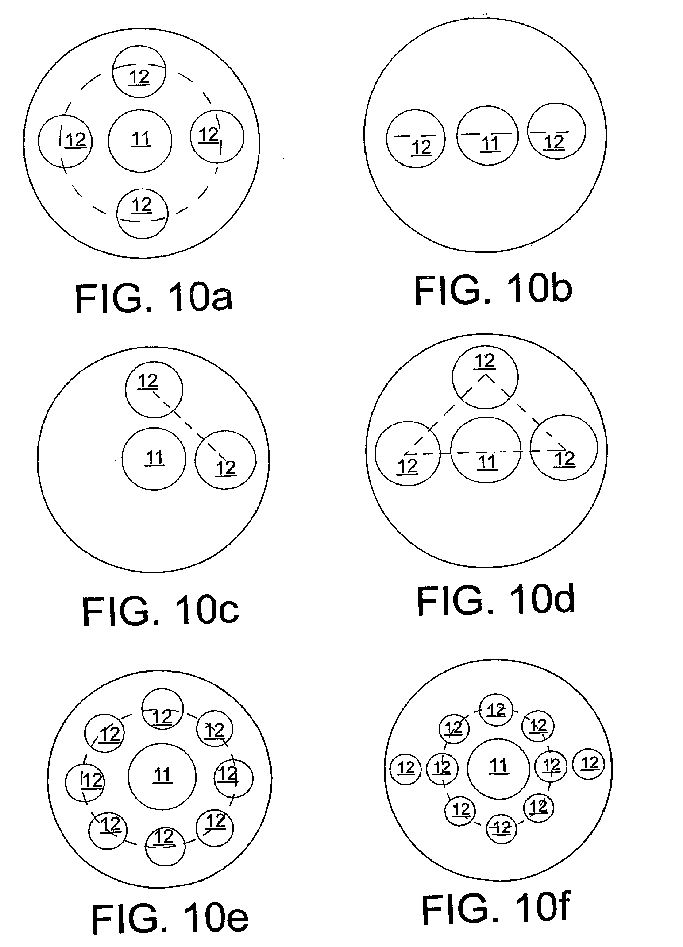

In accordance with an embodiment, the by-pass valves 12 are radially arranged according to a line comprising a closed portion either enclosing or passing through the main valve assembly 11. To the purpose, see for example the configurations depicted in Fig. 10a, 10d, 10e, 10f in which the arrangement of the by-pass valves 12 is illustrated by means of a dotted line.

According to a further possible embodiment, the bypass valves 12 are radially arranged either according to an external open line or passing through the main valve assembly 11. To the purpose, see for example Fig. 10b and 10c.

Preferably, the by-pass valves 12 are arranged according to a circumference having the main valve assembly 11 in the centre thereof, for example in a number of four, preferably such that successive by-pass valves of the plurality of by-pass valves 12 are angularly substantially evenly spaced away from each other (to the purpose, see for example 10a).

Referring back to Fig. 3 to 5, the main valve assembly 11 advantageously develops according to a main valve development axis V that is substantially coincident with the device development axis A. In other words, the main valve assembly 11 is substantially arranged on the device development axis A and the by-pass valves 12 are radially arranged about the device development axis A. Thereby, the radial overall dimensions of the main valve assembly 11-by-pass valves 12 whole are optimized.

The device 1 comprises a housing 20 defining a filter chamber 21 therein, which is suitable to accommodate the main filter therein 10. The housing 20, which advantageously develops along an housing development axis H coincident with the device development axis A, preferably comprises a tubular body 22 opened at the ends thereof, which can be closed by means of suitable removable closure members. The provision of the tubular body 22 of the housing 20 allows carrying out the mounting operations of several device components, particularly the insertion of the main filter 10, main valve assembly 11 and by-pass valves 12.

According to a possible embodiment, the tubular body 22 is closed at the lower end thereof by means of a lower closure member 23, which can be connected to the housing 20 for example by means of threaded connecting members 24. The by-pass ports 17 are advantageously formed in the lower closure element 23.

In accordance with a further embodiment, the tubular body 22 is closed at the upper end by means of an upper closure element 25 comprising an end tubular body 26 in which the tubular body 22 of the housing 20 can be inserted, and a cap 27 for closing the end tubular body 26. The end tubular body 26 advantageously comprises flanges 28 for connecting the device 1 to a support (not shown in the figures), for example by means of threaded connecting members. Furthermore, in accordance with a possible embodiment, in the end tubular body 26 are formed the inlet port 7 and the outlet port 8.

According to a possible embodiment, the main filter 10 comprises a support body 29, preferably tubular-shaped, which can be covered by a layer of filtering material 30, for example comprising microfiber material. The main filter 10, particularly the support body 29 thereof, defines a channel 31 for conveying the oil, either filtered or to be filtered, which develops along a channel development axis C. Furthermore, advantageously, the support body 29 has a plurality of through holes 32 for the oil. Thereby, the oil can flow between the outside and inside of the main filter 10 by means of the through holes 32 and be filtered by means of the layer of filtering material 30. Preferably, the oil is filtered from the outside to the inside of the main filter 10, such that the oil, in order to be filtered, first flows through the layer of filtering material 30 and is subsequently conveyed to the channel 31 via the through holes 32 of the support body 29. The main filter 10 is advantageously supported within the filter chamber 21 above by means of an upper support 33 and below by means of a lower support 34. According to a possible embodiment, the upper 33 and lower 34 supports comprise a first portion, respectively 33' and 34', intended to be inserted within the conveying channel 31 of the support body 29, and a second portion, respectively 33" and 34", intended to wrap up the layer of filtering material 30 at the upper and lower ends.

In accordance with an embodiment, the device 1 comprises a partition wall 35 arranged in an end chamber 36 defined by the end tubular body 26, such as to divide the chamber into an inlet portion 36' that is fluidically connected to the inlet port 7 and an outlet portion 36" that is fluidically connected to the outlet port 8.

The partition wall 35 further comprises a tubular portion 37 suitable to be inserted within the conveying channel 31 of the main filter 10. Thereby, in the normal conditions of use of the device 1, the oil flowing from the inlet port 7 can be conveyed in the inlet portion 36' of the end chamber 36 and subsequently to the filter chamber 21. From here, the oil can pass through the main filter 10 and be then conveyed in the conveying channel 31, from where, once filtered, it can reach the outlet portion 36" of the end chamber 36 and thus be discharged by the device 1 through the outlet port 8. The partition wall 35 can be firmly maintained in the proper position by a spring 63 acting between the upper cap 27 and partition wall 35, such as to bias the latter against the upper support 33.

Advantageously, the main valve assembly 11 is radially arranged at the conveying channel 31. Preferably, the main valve assembly 11 is substantially co-axial with the conveying channel 31 (i.e. in other words, the main valve development axis V is substantially co-axial with the channel development axis H), and still more preferably, is at least partially accommodated therein. Thereby, the pathway deviations are reduced to which the oil is subjected when from the conveying channel 31 it reaches the main valve assembly 11, and vice versa.

Further advantageously, the by-pass valves 12 are radially arranged outside the conveying channel 31. Particularly, according to a possible embodiment, the main filter 10 radially divides the filter chamber 21 in an outer chamber portion 21' that is radially comprised between the housing 20 and main filter 10, and in an inner chamber portion 21", within the main filter 10, which advantageously comprises the conveying channel 31 at which, as stated above, the main valve assembly 11 is radially arranged. Preferably, the housing 20 and main filter 10 are cylinder-shaped, thereby the outer chamber portion 21' is annular-shaped.

Advantageously, the by-pass valves 12 are radially at least partially arranged at the outer chamber portion 21' of the filter chamber 21, such as to reduce the pathway deviations to which the oil is subjected between the outer chamber portion 21' and by-pass valves 12, and thus also the pressure losses. Further advantageously, the by-pass ports 17 are also radially arranged at least partially at the outer chamber portion 21'. Furthermore, still more advantageously, to each one of the by-pass valves 12 corresponds one of the by-pass ports 17, which is arranged in a radial position substantially corresponding to the radial position of the by-pass valve 12. Thereby, the deviations and pressure losses of the oil are reduced along the pathway from the outer chamber portion 21' to the by-pass ports 17 from which the oil can be discharged into the oil accumulation means without being subjected to excessive pressure losses.

In accordance with one embodiment, the by-pass valves 12 comprise by-pass pistons 38 sliding within bypass chambers 39 that are fluidically arranged between the inlet port 7 and by-pass ports 17, and elastic means 40 suitable to bias the by-pass pistons 38 in such a position as to prevent the oil to flow between the inlet port 7 and by-pass port 17. Preferably, the by-pass chambers 39 comprise an upper opening 41 providing the fluid connection between the by-pass chambers 39 and outer chamber portion 21', and are further opened below by means of the by-pass ports 17. The elastic means 40, such as springs, bias the by-pass pistons 38 such that the latter occlude the upper openings 41, thereby preventing the pressurized oil from passing therethrough. The springs are shaped such as to apply on the by-pass pistons 38 elastic forces such that, when the oil in the outer chamber portion 21' is below the by-pass valve pressure threshold value P_{vbp}, the by-pass pistons 38 cannot perform movements away from the upper openings 41. Preferably; the elastic means 40 bias the by-pass pistons from the bottom up. The by-pass valve pressure threshold value P_{vbp} is preferably equal to about 2.5 bar.

In accordance with an embodiment, the pressurization valve 15 of the main valve assembly 11 comprises a pressurization piston 42 sliding within a pressurization chamber 43 that is fluidically arranged between the main filter 10 and auxiliary or discharge port 9, and elastic means 44, such as a spring, that are suitable to bias the pressurization piston 42 in a position such as to prevent the oil from passing through the main filter 10 and auxiliary or discharge port 9. The pressurization chamber 43 is advantageously defined by a tubular portion 45 of the housing 20, which, preferably, axially develops according to the housing axis of development H until it is partially inserted within the conveying channel 31 of the main filter 10. Further advantageously, the tubular portion 45 of the housing 20 comprises an end-of-stroke stop 46 suitable to prevent the pressurization piston 42 from exiting the pressurization chamber 43 after it has been biased by the elastic means 44. According to a possible embodiment, the tubular portion 45 of the housing 20 comprises one or more side slots 47 having the function of causing the oil that is present within the conveying channel 31 of the main filter 10 to come in contact with the pressurization piston 42, particularly on thrust surfaces 48 thereof. These thrust surfaces 48 are shaped and oriented such that the pressure of the oil within the conveying channel 31 acts on the pressurization piston 42 in a contrary manner relative to the elastic means 44. For example, the thrust surfaces 48 can have a sawtooth shape. When the oil that is present within the conveying channel 31 exceeds the pressurization valve pressure threshold value Pᵥₚ (preferably equal to about 0.5 bar + 10%), the pressurization piston 42 will move thus clearing the side slots 47 and thereby allowing the oil to flow from the conveying channel 31 to the pressurization chamber 43, from where the oil can reach the auxiliary or discharge port 9. Preferably, the elastic means 44 bias the pressurization piston 42 from the bottom up, according to the bias direction of the by-pass valves 12 by the elastic means 40.

In accordance with an embodiment, the anticavitation valve 16 of the main valve assembly 11 comprises an anticavitation piston 49 that is movable relative to the main valve assembly 11 independently of the pressurization valve 15, particularly independently of the pressurization piston 42. The anticavitation piston 49 movements are determined by the action of the gravity force and/or oil pressure thereon. The anticavitation piston 49, due to the gravity (and/or pressure within the conveying channel 31) is preferably rested on the end-of-stroke stop 46 of the housing 20, on the opposite side relative to the side against which the pressurization piston 42 is abutted due to the elastic means 44. The anticavitation piston 49 preferably comprises a bell-shaped portion 50 and a stem 51 that is suitable to slide within a guide 52 formed in the end-of-stroke stop 46 of the housing 20. The stem 51 is advantageously widened at the lower end thereof, such as to prevent the anticavitation piston 49 to come off the guide 52. When the oil pressure within the conveying channel 31 falls below the anticavitation valve pressure threshold value P_{vac}, for example when an oil depression condition occurs, the anticavitation piston 49 moves from the bottom up, thus clearing an opening 53 that is preferably formed in the end-of-stroke stop 46. Thereby, a fluid connection is carried out between the auxiliary or discharge port 9 and the outlet port 8, thereby allowing the transfer of part of the oil accumulated in the accumulation means to the device discharge. Particularly, the oil can rise through the pressurization chamber 43, flow through the opening 53 of the end-of-stroke stop 46, flow through the conveying channel 31 of the main filter 10 and reach the outlet port 8 therefrom. It should be noted that, according to the embodiment described herein, the opening movement of the anticavitation piston 49 is opposed to the opening movement of the pressurization piston 42.

The anticavitation valve pressure threshold value P_{vac} is preferably about 0.5 bar - 10%. Thereby, the pressure threshold values of the pressurization valve Pᵥₚ and anticavitation valve P_{vac} are both about 0.5 bar, but the first is about 10% higher than 0.5 bar, while the second is about 10% lower than 0.5 bar. Thereby, the pressurization valve and anticavitation valve are prevented from opening at the same pressure.

Preferably, the anticavitation piston 49 is substantially co-axial with the pressurization piston 42 (both are advantageously arranged along the main valve development axis V) and thereby, further advantageously, the anticavitation piston 49 and pressurization piston 52 are substantially co-axial with the conveying channel 31 of the main filter 10 and housing 20, which develops along the channel development axis C, which is preferably coincident with the main valve development axis V as stated above.

According to a possible embodiment, the device 1 comprises a secondary filter 54 that is fluidically arranged between the main valve assembly 11 and auxiliary or discharge port 9. This secondary filter 54 has the function of filtering the oil that is sucked by the accumulation means following the opening of the anticavitation valve 16 or that is discharged by the device 1 into the accumulation means following the opening of the pressurization valve 15. The secondary filter 54 is preferably housed within a secondary chamber 55 that is defined by a secondary housing 56. In accordance with an embodiment, the secondary housing 56 is arranged in the lower side 18 of the device 1 and is distinct from and connected to the housing 20, preferably at the lower closure element 23.

Advantageously, the secondary housing 56 comprises a connecting channel 57, which is fluidically connected to the pressurization chamber 43, and further advantageously, substantially co-axial thereto. Thereby, in the pathway between the pressurization chamber 43 and secondary housing 56, the oil is not forced to carry out considerable pathway deviations which would cause undesired pressure losses. Still more advantageously, the secondary housing 56 is also substantially co-axial with the pressurization chamber 43.

The secondary filter 54 that is accommodated within the secondary chamber 55 can be of a type similar to that of the main filter 10, preferably with a lower axial length. In accordance with a possible embodiment, the secondary filter 54 comprises a support body 58, preferably tubular-shaped, which can be covered by a layer of filtering material 59, for example comprising microfiber material. The secondary filter 54, particularly the support body 58 thereof, defines a channel 60 for conveying the oil, either filtered or to be filtered, that develops according to a secondary channel developing axis CS. Furthermore, advantageously, the support body 58 has a plurality of through holes 61 for the oil. Thereby, the oil can flow between the outside and inside of the secondary filter 54 through the through holes 61 and be filtered through the layer of filtering material 59. Advantageously, the secondary filter 54 is substantially co-axial with the main filter 10.

According to a possible embodiment, the secondary housing 56 comprises at least one circumferential opening 62 for the oil to flow between the inside and outside of the secondary housing 56. This circumferential opening 62 advantageously forms the auxiliary or discharge passageway 9.

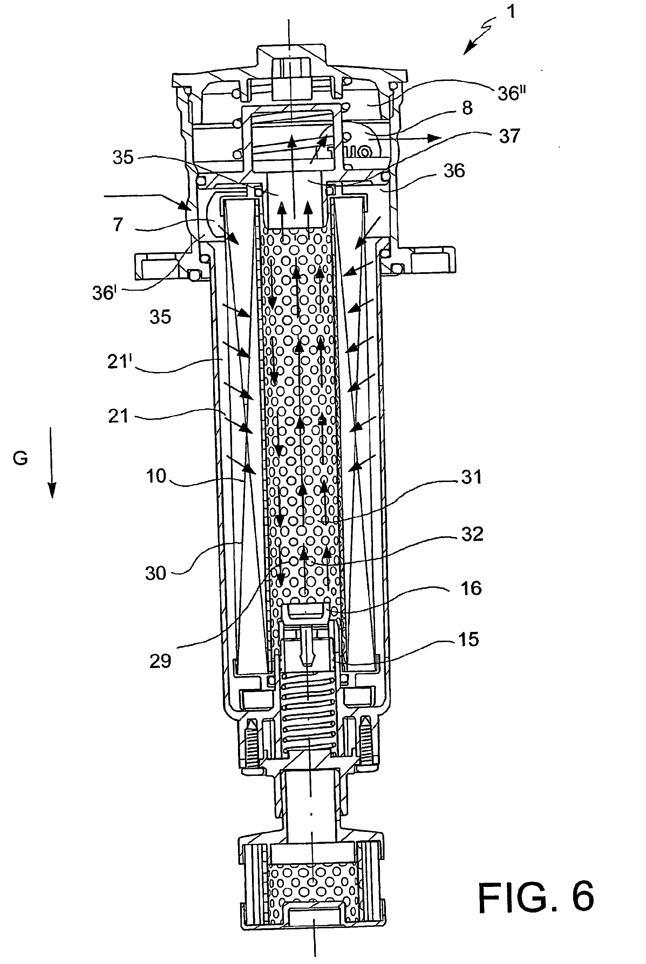

With reference to the embodiments illustrated in the Fig. 6 to 9, possible operating modes of the filtering device according to the invention will be now described.

With reference to Fig. 6 and arrows depicted therein (which schematically illustrate the oil flowing direction), in the normal use conditions, the pressurized oil enters through the inlet port 7 in the inlet portion 36' of the end chamber 36, from which it reaches the outer chamber portion 21' of the filter chamber 21 and the main filter 10. The oil flows through the main filter 10 in the radial direction from the outside to the inside, particularly it flows through the layer of filtering material 30 and the support body 29 by means of the holes 32 of the latter, thereby being filtered. Subsequently, the oil flows in the conveying channel 31 of the main filter 10, flows through the tubular portion 37 of the partition wall 35 and reaches the outlet portion 36" of the end chamber 36, from which it is discharged by the device 1 through the outlet port 8. In the normal conditions of use, the oil pressure within the conveying channel 31 of the main filter at the main valve assembly 10 is lower than the pressurization valve pressure threshold value Pᵥₚ and higher than the anticavitation valve pressure threshold value P_{vac} and thus both the pressurization valve 15, and the anticavitation valve 16 remain closed. Furthermore, in the normal conditions of use, the pressure of the oil in the outer chamber portion 21' of the filter chamber 21, proximate to the by-pass valves 12, is lower than the by-pass valve pressure threshold value P_{vbp}, and thus also the by-pass 12 valves remain closed.

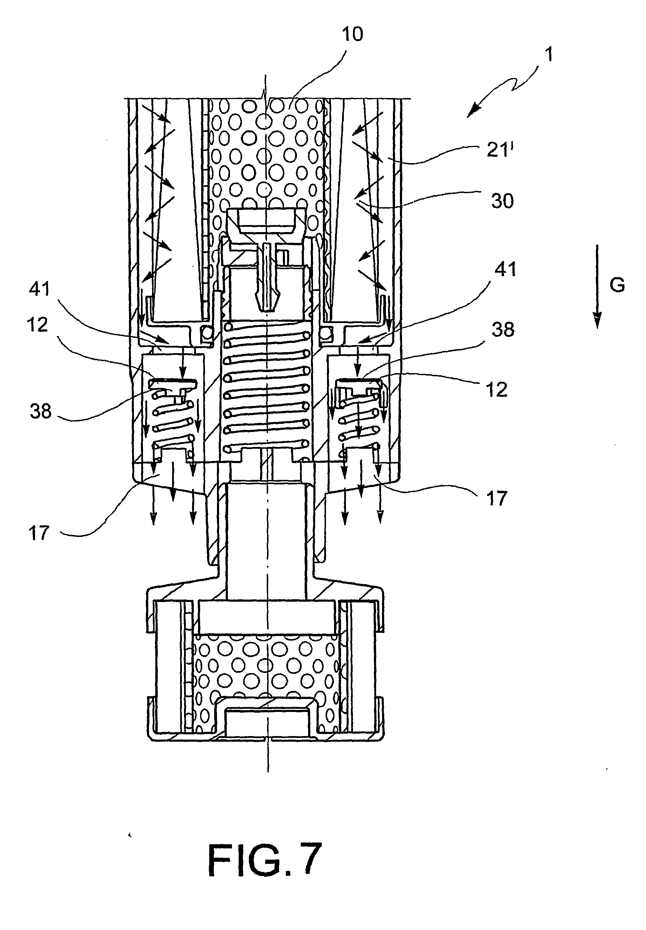

With reference now to Fig. 7 and arrows depicted therein (schematically designating the oil flowing direction), in the event that the main filter 10 is obstructed, particularly when the layer of filtering material 30 requires to be replaced, the oil, that has reached the outer chamber portion 21' of the filter chamber 21 according to the modes described with reference to Fig. 6, cannot pass through the layer of filtering material 30 of the main filter 10 (or, at least, not all the oil that is present in the outer chamber portion 21' can flow through the layer of filtering material 30). Consequently, the amount of oil reaching the outer chamber portion 21' is greater than the amount of oil that can be filtered by the main filter 10, and thus the oil pressure in the outer chamber portion 21' increases. When this pressure exceeds the by-pass valve pressure threshold value P_{vbp}, the by-pass valves 12 are opened, i.e. the by-pass pistons 38 are lowered, thus clearing the upper openings 41 and thus allowing the excess oil to be conveyed to the by-pass ports 17 from where the oil can be discharged into the accumulation means.

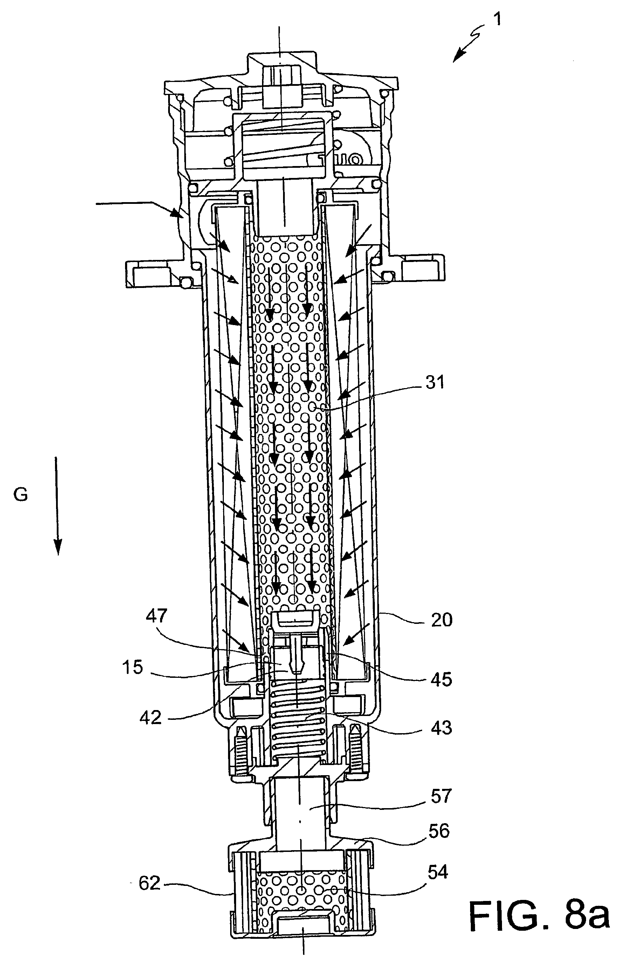

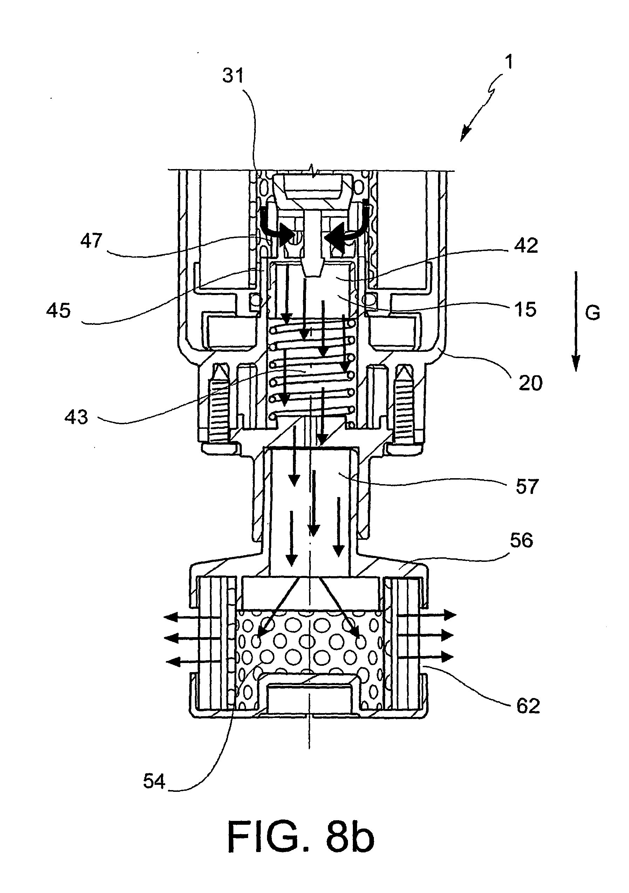

With reference now to Fig. 8a and 8b and arrows illustrated therein (which schematically illustrate the oil flowing direction), in the event of oil pressure peaks occurring along the suction line of the oil-hydraulic circuit 2 (i.e, for example, in the tract of the oil-hydraulic circuit 2 from the outlet port 8 of the device 1 to the first pump 4) which are due for example to blockage or jamming of the actuators 3 of the operating machine driven by the oil-hydraulic circuit in which the filtering device 1 is inserted, when the oil, which has reached the conveying channel 31 according to the modes described with reference to Fig. 6, exceeds the pressurization valve pressure threshold value Pᵥₚ, the pressurization valve 15 is opened. Particularly, the pressurization piston 42 moves downwards by sliding within the pressurization chamber 43, thereby opening the side slots 47 of the tubular portion 45 of the housing 20 and thus allowing the oil to flow out of the conveying channel 31 to the pressurization chamber 43 until it reaches the connecting channel 57 of the secondary housing 56, the secondary filter 54 and circumferential opening 62 of the secondary housing 56, through which the oil can be discharged in the accumulation means.

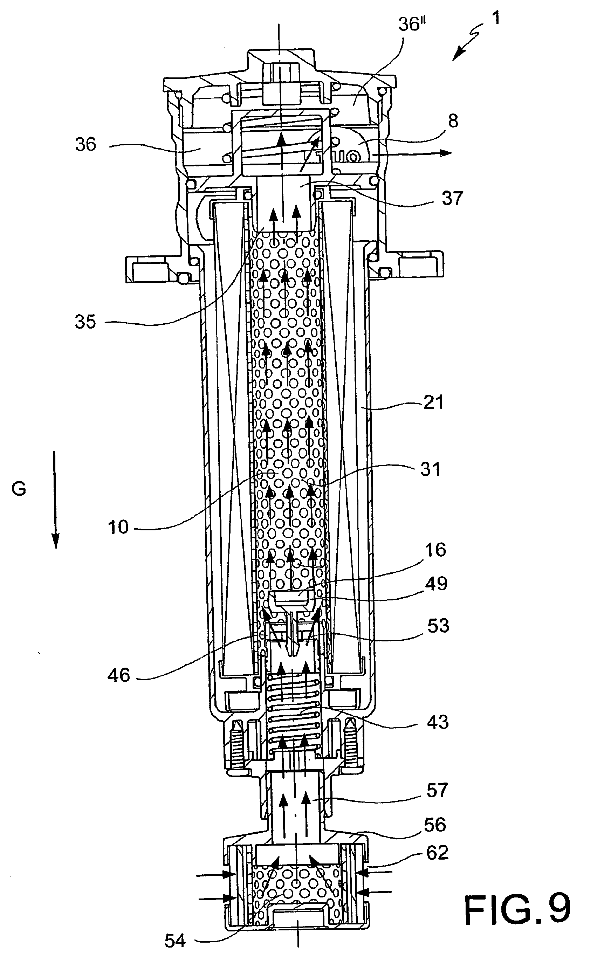

Finally, with reference to Fig. 9 and arrows illustrated therein (which schematically indicate the oil flowing direction), it is possible that within the filter chamber 21, particularly in the conveying channel 31, depressions are generated in the oil, which are due for example to the pumping action by the first pump 4 (pressure condition lower than the anticavitation valve pressure threshold value P_{vac}). Consequently, the anticavitation valve 16 is opened, i.e. the anticavitation piston 49 slides upwards until it clears the opening 53 of the end-of-stroke stop 46, thus causing the oil to flow back from the accumulation means to the outlet port 8. Particularly, the oil taken by the accumulation means enters the device 1 through the circumferential opening 62 of the secondary housing 56, flows through the secondary filter 54 thus being filtered, sequentially flows through the connecting channel 57 of the secondary housing 56, the pressurization chamber 43, the opening 53 of the end-of-stroke stop 46, the conveying channel 31 of the main filter 10, the tubular portion 37 of the partition wall 35, the outlet portion 36" of the end chamber 36 and is finally discharged through the outlet port 8.

From the description given above, those skilled in the art may appreciate how the filtering device according to the invention at least partially resolves the problems mentioned above with reference to the prior art.

Particularly, those skilled in the art may appreciate how the provision of a plurality of by-pass valves has the advantageous consequence of a high reliability and considerable response readiness to the obstructed-filter condition, which condition periodically occurs when the filtering device is being used.

Those skilled in the art may also appreciate how the particular relative arrangement of the main valve assembly and by-pass valves allows adding to the above-mentioned advantages also overall dimensions that are not higher than those of the filtering devices according to the prior art, thereby making the device according to the invention suitable to replace the latter without requiring particular actions on the circuits in which the filtering devices are to be inserted.

Finally, those skilled in the art will appreciate how the filtering device according to the invention optimizes the pathways that the oil is required to follow in the various operating conditions. Particularly, the filtering device according to the invention is shaped such as to reduce the pathway sudden variations to which the oil must be subjected, thereby reducing the pressure loss and increase in the oil temperature, which can alter the physical characteristics thereof.

To the embodiments described above of the filtering device, those skilled in the art, aiming at satisfying contingent and specific requirements, may carry out a number of modifications, adaptations and replacements of elements with functionally equivalent ones, without however departing from the scope of the claims below.

## Claims

1. A device (1) for filtering pressurized oil circulating within a oil-hydraulic circuit (2) for operating one or more oil-hydraulic actuators (3), comprising:
- at least one inlet port (7) for the oil flowing from said actuators (3) to enter the device (1);
- at least one outlet port (8) for the oil intended for said actuators (3) to exit the device (1);
- a main filter (10) suitable to filter the oil flowing from said inlet port (7) and directed to said outlet port (8) ;
- at least one auxiliary or discharge port (9) and one or more by-pass ports (17) to place said device (1) in fluid communication with means (6) for accumulating said oil;
- a main valve assembly (11) that is fluidically arranged between said main filter (10) and said at least one auxiliary or discharge port (9);
wherein said device (1) axially develops according to a device development axis (A) and radially about said device development axis (A) **characterized in that** the device (1) comprises a plurality of by-pass valves (12) which are fluidically arranged in parallel relationship
between said inlet port (7) and said one or more by-pass ports (17), said by-pass valves (12) being radially arranged about said main valve assembly (11).

2. The device (1) according to claim 1, wherein said by-pass valves (12) are radially arranged according to a line comprising a closed portion enclosing therein or passing through said main valve assembly (11), or according to an open line external to or passing through said main valve assembly (11).

3. The device (1) according to claim 1, wherein said by-pass valves (12) are radially arranged according to a circumference having said main valve assembly (11) in the centre thereof.

4. The device (1) according to claim 1, wherein successive by-pass valves (12) of said plurality of by-pass valves (12) are angularly substantially equally spaced away from each other.

5. The device (1) according to claim 1, wherein said by-pass valves (12) are in a number of four.

6. The device (1) according to any preceding claim, wherein said main valve assembly (11) and said by-pass valves (12) are axially arranged substantially at the same level.

7. The device (1) according to claim 1, wherein said main filter (10) comprises a support body (29) defining a channel (31) for conveying the oil, either filtered or to be filtered, said conveying channel (31) developing along a channel developing axis (C).

8. The device (1) according to claim 1, wherein said main valve assembly (11) develops according to a main valve development axis (V) and said main valve development axis (V) is substantially coincident with said device development axis (A).

9. The device (1) according to claim 7, wherein said support body (29) comprises a plurality of holes (32) for the oil to pass therethrough and is wrapped by a layer of filtering material (30) for filtering the oil and said main valve assembly (11) is at least partially accommodated within said conveying channel (31), wherein said main valve development axis (V) is substantially coincident with said channel development axis (C) and said by-pass valves (12) are radially arranged outside said conveying channel (31).

10. The device (1) according to claim 1, comprising a housing (20) defining a filter chamber (21) accommodating said main filter (10) therein, wherein said housing (20) axially develops along a housing development axis (H) coincident with said device development axis (A) and said main filter (10) radially divides said filter chamber (21) into an outer chamber portion (21'), that is radially comprised between said housing (20) and said main filter (10), and an inner chamber portion (21"), within said main filter (10),
wherein said inner chamber portion (21") comprises said conveying channel (31) and said main valve assembly (11) is radially arranged at said inner chamber portion (21") and wherein said by-pass valves (12) and said by-pass ports (17) are radially at least partially arranged at said outer chamber portion (21').

11. The device (1) according to claim 1, wherein:
- said by-pass valves (12) are shaped such as to prevent the oil from flowing through from said inlet port (7) to said by-pass ports (17) when said oil, in the tract between said inlet port (7) and by-pass valves (12) and proximate thereto, is at a pressure lower than a by-pass valve pressure threshold value (P_{vbp}) and such as to allow the oil to flow therethrough when it is at a pressure higher than said by-pass valve pressure threshold value (P_{vbp}), in the same position and
- said main valve assembly (11) comprises a pressurization valve (15) that is shaped such as to prevent the oil from flowing through from said main filter (10) to said auxiliary or discharge port (9) when the oil, in the tract between said main filter (10) and pressurization valve (15) and proximate thereto, is at a pressure lower than a pressurization valve pressure threshold value (Pᵥₚ) and such as to allow the oil to flow therethrough when it is at a pressure higher than said pressurization valve pressure threshold value (Pᵥₚ), in the same position and,
- said main valve assembly (11) further comprises an anticavitation valve (16) that is shaped such as to prevent the oil from flowing through from said main filter (10) to said auxiliary or discharge port (9) when the oil, in the tract between said main filter (10) and the anticavitation valve (16) and proximate thereto, is at a pressure higher than a anticavitation valve pressure threshold value (P_{vac}) and such as to allow the oil to flow therethrough from said auxiliary or discharge port (9) to said outlet port (8) when the oil is at a pressure lower than said anticavitation valve pressure threshold value (P_{vac}), in the same position.

12. The device (1) according to claim 11, wherein:
- said anticavitation valve (16) comprises an anticavitation piston (49) that is movable relative to said main valve assembly (11) independently of said pressurization valve (15), wherein the movements of said anticavitation piston (49) are determined by the action of gravity and/or pressure of said oil on the anticavitation piston (49) and,
- said pressurization valve (15) comprises a pressurization piston (42) sliding within a pressurization chamber (43) that is fluidically arranged between said main filter (10) and said auxiliary or discharge port (9), and elastic means (44) suitable to bias said pressurization piston (42) in a position such as to prevent the oil from passing through said main filter (10) and said auxiliary or discharge port (9) and wherein said anticavitation piston (49) is substantially co-axial with said pressurization piston (42) and with said conveying channel (31) and,
- said by-pass valves (12) comprise by-pass pistons (38) sliding within by-pass chambers (39) that are fluidically arranged between said inlet port (7) and said by-pass ports (17) and elastic means (40) suitable to bias said by-pass pistons (38) in such a position as to prevent the oil from passing through said inlet port (7) and said by-pass ports (17).

13. The device (1) according to claim 11, wherein:
- said pressurization valve pressure threshold value (Pᵥₚ) is equal to about 0.5 bar + 10% and,
- said anti-cavitation valve pressure threshold value (P_{vac}) is equal to about 0.5 bar -10% and,
- said by-pass valve pressure threshold value (P_{vbp}) is equal to about 2.5 bar.

14. The device (1) according to claim 1, comprising a secondary filter (54) that is fluidically arranged between said main valve assembly (11) and said auxiliary or discharge port (9).

15. The device (1) according to claim 14, wherein said secondary filter (54) is arranged on a lower side (18) of said device (1) and housed within a secondary chamber (55) defined by a secondary housing (56) distinct from said housing (20) accommodating the main filter (10) and connected with said housing (20), wherein said secondary filter (54) comprises a support body (58) defining a through channel (60) for conveying the oil, either filtered or to be filtered, said conveying channel (60) developing along a secondary channel developing axis (CS) which is substantially coincident with said channel development axis (C) and wherein said support body (58) comprises a plurality of holes (61) for the oil to pass therethrough and is wrapped by a layer of filtering material (59) for filtering the oil.

## Patentansprüche

1. Vorrichtung (1) zum Filtern von druckbeaufschlagtem Öl, das innerhalb eines ölhydraulischen Kreislaufs (2) zum Betreiben zumindest eines ölhydraulischen Betätigungselements (3) zirkuliert, mit:
- zumindest einer Einströmöffnung (7) für das von dem Betätigungselement (3) zuströmende Öl zum Eintritt in die Vorrichtung (1);
- zumindest einer Ausströmöffnung (8) für das für das Betätigungselement (3) vorgesehene Öl zum Ausströmen aus der Vorrichtung (1);
- einem Hauptfilter (10), der zum Filtern des von der Einströmöffnung (7) herströmenden und zu der Ausströmöffnung (8) gerichteten Öls geeignet ist;
- zumindest einer Hilfs- oder Ablassöffnung (9) und zumindest einer Umleitöffnung (17) zum Herstellen einer fluidischen Verbindung zwischen der Vorrichtung (1) und einer Einrichtung (6) zum Aufsammeln des Öls;
- einem Hauptventilaufbau (11), der fluidisch zwischen dem Hauptfilter (10) und der zumindest einen Hilfs- oder Ablassöffnung (9) angeordnet ist;
wobei die Vorrichtung (1) axial entsprechend einer Vorrichtungsaufbauachse (A) und radial um die Vorrichtungsaufbauachse (A) aufgebaut ist, **dadurch gekennzeichnet, dass** die Vorrichtung (1) eine Mehrzahl Umleitventile (12) aufweist, die fluidisch in paralleler Beziehung zwischen der Einströmöffnung (7) und der zumindest einen Umleitöffnung (17) angeordnet sind, wobei die Umleitventile (12) radial um den Hauptventilaufbau (11) herum angeordnet sind.

2. Vorrichtung (1) nach Anspruch 1, bei der die Umleitventile (12) entsprechend einer Linie radial angeordnet sind, welche einen geschlossenen Abschnitt aufweist, der den Hauptventilaufbau (11) umfasst oder durch diesen hindurchtritt, oder entsprechend einer offenen Linie, die außerhalb des Hauptventilaufbaus (11) oder durch ihn hindurch verläuft.

3. Vorrichtung (1) nach Anspruch 1, bei der die Umleitventile (12) entsprechend einer Umfangslinie mit dem Hauptventilaufbau (11) in ihrer Mitte radial angeordnet sind.

4. Vorrichtung (1) nach Anspruch 1, bei der aufeinanderfolgende Umleitventile (12) aus der Mehrzahl Umleitventile (12) voneinander winkelmäßig im Wesentlichen gleich beabstandet sind.

5. Vorrichtung (1) nach Anspruch 1, bei der die Umleitventile (12) in der Anzahl vier vorliegen.

6. Vorrichtung (1) nach einem der vorstehenden Ansprüche, bei der der Hauptventilaufbau (11) und die Umleitventile (12) axial im Wesentlichen auf gleichem Niveau angeordnet sind.

7. Vorrichtung (1) nach Anspruch 1, bei der der Hauptfilter (10) einen Haltekörper (29) aufweist, der einen Kanal (31) zum Transportieren des Öls, gefiltert oder zu filtern, begrenzt, welcher Transportkanal (31) entlang einer Kanalaufbauachse (C) aufgebaut ist.

8. Vorrichtung (1) nach Anspruch 1, bei der der Hauptventilaufbau (11) entsprechend einer Hauptventilaufbauachse (V) aufgebaut ist und die Hauptventilaufbauachse (V) im Wesentlichen mit der Vorrichtungsaufbauachse (A) zusammenfällt.

9. Vorrichtung (1) nach Anspruch 7, bei der der Haltekörper (29) eine Mehrzahl Löcher (32) zum Hindurchtreten des Öls aufweist und mit einer Lage Filtermaterial (30) zum Filtern des Öls eingewickelt ist und der Hauptventilaufbau (11) zumindest teilweise innerhalb des Transportkanals (31) untergebracht ist, wobei die Hauptventilaufbauachse (V) im Wesentlichen mit der Kanalaufbauachse (C) zusammenfällt und die Umleitventile (12) radial außerhalb des Transportkanals (31) angeordnet sind.

10. Vorrichtung (1) nach Anspruch 1 mit einem Gehäuse (20), das eine den Hauptfilter (10) in sich unterbringende Filterkammer (21) begrenzt, wobei das Gehäuse (20) axial entlang einer Gehäuseaufbauachse (H) aufgebaut ist, die mit der Vorrichtungsaufbauachse (A) zusammenfällt, und der Hauptfilter (10) die Filterkammer (21) radial aufteilt in einen Außenkammerabschnitt (21'), der radial zwischen dem Gehäuse (20) und dem Hauptfilter (10) liegt, und einen Innenkammerabschnitt (21 ") innerhalb des Hauptfilters (10),
wobei der Innenkammerabschnitt (21 ") den Transportkanal (31) enthält und der Hauptventilaufbau (11) radial in dem Innenkammerabschnitt (21 ") angeordnet ist und die Umleitventile (12) und die Umleitöffnung (17) radial zumindest teilweise in dem Außenkammerabschnitt (21') angeordnet sind.

11. Vorrichtung (1) nach Anspruch 1, bei der:
- die Umleitventile (12) so geformt sind, dass sie das Öl vom Strömen durch die Einströmöffnung (7) zu der Umleitöffnung (17) abhalten, wenn das Öl in dem Abschnitt zwischen der Einströmöffnung (7) und den Umleitventilen (12) und benachbart dazu einen niedrigeren Druck als ein Umleitventil-Druckschwellenwert (P_{vbp}) hat, und so, dass sie das Öl hindurchströmen lassen, wenn es an der selben Stelle einen höheren Druck als der Umleitventil-Druckschwellenwert (P_{vbp}) hat, und
- der Hauptventilaufbau (11) ein Druckaufbauventil (15) aufweist, dass so geformt ist, dass es das Öl vom Strömen durch den Hauptfilter (10) zu der Hilfs- oder Ablassöffnung (9) abhält, wenn das Öl in dem Abschnitt zwischen dem Hauptfilter (10) und dem Druckaufbauventil (15) und benachbart dazu einen niedrigeren Druck als ein Druckaufbauventil-Druckschwellenwert (Pᵥₚ) hat, und so, dass es das Öl hindurchströmen lässt, wenn es an der selben Stelle einen höheren Druck als der Druckaufbauventil-Druckschwellewert (Pᵥₚ) hat,
- der Hauptventilaufbau (11) ferner ein Antikavitationsventil (16) aufweist, das so geformt ist, dass es das Öl vom Strömen durch den Hauptfilter (10) zu der Hilfs- oder Ablassöffnung (9) abhält, wenn das Öl in dem Abschnitt zwischen dem Hauptfilter (10) und dem Antikavitationsventil (16) und benachbart dazu einen höheren Druck als ein Antikavitationsventil-Druckschwellenwert (P_{vac}) hat, und so, dass es das Öl von der Hilfs- oder Ablassöffnung (9) zu der Ausströmöffnung (8) hindurchströmen lässt, wenn das Öl an der selben Stelle einen niedrigeren Druck als die Antikavitationsventil-Druckschwellenwert (P_{vac}) hat.

12. Vorrichtung (1) nach Anspruch 11, bei der:
- das Antikavitationsventil (16) einen Antikavitationskolben (49) aufweist, der relativ zu dem Hauptventilaufbau (11) unabhängig von dem Druckaufbauventil (15) beweglich ist, wobei die Bewegungen des Antikavitationskolbens (49) bestimmt sind durch die Einwirkung der Schwerkraft und/oder des Drucks des Öls auf den Antikavitationskolben (49), und
- das Druckaufbauventil (15) einen Druckaufbaukolben (42) aufweist, der innerhalb einer fluidisch zwischen dem Hauptfilter (10) und der Hilfs- oder Ablassöffnung (9) angeordneten Druckaufbaukammer (43) verschiebbar ist, und eine zum Vorspannen des Druckaufbaukolbens (42) in einer solchen Position geeignete elastische Einrichtung (44), dass das Öl vom Strömen durch den Hauptfilter (10) und die Hilfs- oder Ablassöffnung (9) abgehalten wird, und
wobei der Antikavitationskolben (49) im Wesentlichen koaxial zu dem Druckaufbaukolben (42) und zu dem Transportkanal (31) liegt, und
- die Umleitventile (12) Umleitkolben (38) aufweisen, die innerhalb von Umleitkammern (39) verschiebbar sind, die fluidisch zwischen der Einströmöffnung (7) und den Umleitöffnungen (17) angeordnet sind, und eine zum Vorspannen der Umleitkolben (38) in einer solchen Position geeignete elastische Einrichtung (40), dass das Öl vom Strömen durch die Einströmöffnung (7) und die Umleitöffnung (17) abgehalten wird.

13. Vorrichtung (1) nach Anspruch 11, wobei:
- der Druckaufbauventil-Druckschwellenwert (Pᵥₚ) ungefähr 0,5 bar + 10 % beträgt und
- der Antikavitationsventil-Druckschwellenwert (P_{vac}) ungefähr 0,5 bar - 10 % beträgt und
- der Umleitventil-Druckschwellenwert (P_{vbp}) ungefähr 2,5 bar beträgt.

14. Vorrichtung (1) nach Anspruch 1 mit einem Sekundärfilter, der fluidisch zwischen dem Hauptventilaufbau (11) und der Hilfs- oder Ablassöffnung (9) angeordnet ist.

15. Vorrichtung (1) nach Anspruch 14, bei der der Sekundärfilter (54) an einer unteren Seite (18) der Vorrichtung (1) angeordnet und innerhalb einer Sekundärkammer (55) untergebracht ist, die durch ein von dem den Hauptfilter (10) beinhaltenden Gehäuse (20) verschiedenen und mit dem Gehäuse (20) verbundenen Sekundärgehäuse (56) begrenzt ist, wobei der Sekundärfilter (54) einen Haltekörper (58) aufweist, der einen Durchtrittskanal (60) zum Transportieren des Öls, gefiltert oder zu filtern, begrenzt, der Transportkanal (60) entlang einer Sekundärkanalaufbauachse (CS) aufgebaut ist, die im Wesentlichen mit der Kanalaufbauachse (C) zusammenfällt und wobei der Haltekörper (58) eine Mehrzahl Löcher (61) für das Hindurchströmen des Öls aufweist und mit einer Schicht Filtermaterial (59) zum Filtern des Öls umwickelt ist.

## Revendications

1. Dispositif (1) pour filtrer de l'huile sous pression circulant à l'intérieur d'un circuit oléohydraulique (2) destiné à actionner un ou plusieurs actionneurs oléohydrauliques (3), comprenant :
- au moins un orifice d'entrée (7) permettant à l'huile provenant desdits actionneurs (3) d'entrer dans le dispositif (1) ;
- au moins un orifice de sortie (8) permettant à l'huile destinée auxdits actionneurs (3) de sortir du dispositif (1) ;
- un filtre principal (10) conçu pour filtrer l'huile provenant dudit orifice d'entrée (7) et se dirigeant vers ledit orifice de sortie (8) ;
- au moins un orifice auxiliaire ou de décharge (9) et un ou plusieurs orifices de dérivation (17) pour placer ledit dispositif (1) en communication fluide avec des moyens (6) destinés à accumuler ladite huile ;
- un ensemble de soupape principale (11) qui est disposé de manière fluidique entre ledit filtre principal (10) et ledit au moins un orifice auxiliaire ou de décharge (9) ;
dans lequel ledit dispositif (1) se développe axialement selon un axe de développement de dispositif (A) et radialement autour dudit axe de développement de dispositif (A), **caractérisé en ce que** le dispositif (1) comprend une pluralité de soupapes de dérivation (12) qui sont disposées de manière fluidique en relation parallèle entre ledit orifice d'entrée (7) et lesdits un ou plusieurs orifices de dérivation (17), lesdites soupapes de dérivation (12) étant disposées de manière radiale autour dudit ensemble de soupape principale (11).

2. Dispositif (1) selon la revendication 1, dans lequel lesdites soupapes de dérivation (12) sont disposées radialement selon une ligne comprenant une partie fermée les renfermant ou passant à travers ledit ensemble de soupape principale (11), ou selon une ligne ouverte extérieure audit ensemble de soupape principale (11) ou le traversant.

3. Dispositif (1) selon la revendication 1, dans lequel lesdites soupapes de dérivation (12) sont disposées radialement selon une circonférence ayant ledit ensemble de soupape principale (11) au centre.

4. Dispositif (1) selon la revendication 1, dans lequel les soupapes de dérivation successives (12) de ladite pluralité de soupapes de dérivation (12) sont espacées angulairement de façon sensiblement égale les unes par rapport aux autres.

5. Dispositif (1) selon la revendication 1, dans lequel lesdites soupapes de dérivation (12) sont au nombre de quatre.

6. Dispositif (1) selon l'une quelconque des revendications précédentes, dans lequel ledit ensemble de soupape principale (11) et lesdites soupapes de dérivation (12) sont disposés axialement sensiblement au même niveau.

7. Dispositif (1) selon la revendication 1, dans lequel ledit filtre principal (10) comprend un corps de support (29) définissant un canal (31) pour acheminer l'huile, qu'elle soit filtrée ou à filtrer, ledit canal d'acheminement (31) se développant le long d'un axe de développement de canal (C).

8. Dispositif (1) selon la revendication 1, dans lequel ledit ensemble de soupape principale (11) se développe selon un axe de développement de soupape principale (V) et ledit axe de développement de soupape principale (V) coïncide sensiblement avec ledit axe de développement de dispositif (A).

9. Dispositif (1) selon la revendication 7, dans lequel ledit corps de support (29) comprend une pluralité de trous (32) permettant à l'huile de traverser et est enveloppé par une couche de matériau de filtrage (30) pour filtrer l'huile et ledit ensemble de soupape principale (11) est au moins partiellement logé à l'intérieur dudit canal d'acheminement (31), dans lequel ledit axe de développement de soupape principale (V) coïncide sensiblement avec ledit axe de développement de canal (C) et lesdites soupapes de dérivation (12) sont disposées radialement à l'extérieur dudit canal d'acheminement (31).

10. Dispositif (1) selon la revendication 1, comprenant un logement (20) définissant une chambre de filtre (21) logeant ledit filtre principal (10), dans lequel ledit logement (20) se développe axialement le long d'un axe de développement de logement (H) coïncidant avec ledit axe de développement de dispositif (A) et ledit filtre principal (10) divise radialement ladite chambre de filtre (21) en une partie de chambre externe (21'), qui est radialement comprise entre ledit logement (20) et ledit filtre principal (10), et une partie de chambre interne (21"), à l'intérieur dudit filtre principal (10),
dans lequel ladite partie de chambre interne (21") comprend ledit canal d'acheminement (31) et ledit ensemble de soupape principale (11) est disposé radialement au niveau de ladite partie de chambre interne (21") et dans lequel lesdites soupapes de dérivation (12) et lesdits orifices de dérivation (17) sont disposés radialement au moins en partie au niveau de ladite partie de chambre externe (21').

11. Dispositif (1) selon la revendication 1, dans lequel :
- lesdites soupapes de dérivation (12) sont formées de sorte à empêcher que l'huile ne s'écoule à travers ledit orifice d'entrée (7) vers lesdits orifices de dérivation (17) lorsque ladite huile, dans la zone entre ledit orifice d'entrée (7) et les soupapes de dérivation (12) et à leur proximité, est à une pression inférieure à une valeur de seuil de pression de soupape de dérivation (P_{vbp}) et de sorte à permettre à l'huile de le traverser lorsqu'elle est à une pression supérieure à ladite valeur de seuil de pression de soupape de dérivation (P_{vbp}), dans la même position et
- ledit ensemble de soupape principale (11) comprend une soupape de pressurisation (15) qui est formée de sorte à empêcher que l'huile ne s'écoule à travers ledit filtre principal (10) vers ledit orifice auxiliaire ou de décharge (9) lorsque l'huile, dans la zone entre ledit filtre principal (10) et la soupape de pressurisation (15) et à leur proximité, est à une pression inférieure à une valeur de seuil de pression de soupape de pressurisation (Pᵥₚ) et de sorte à permettre à l'huile de le traverser lorsqu'elle est à une pression supérieure à ladite valeur de seuil de pression de soupape de pressurisation (Pᵥₚ), dans la même position et,
- ledit ensemble de soupape principale (11) comprend en outre une soupape anti-cavitation (16) qui est formée de sorte à empêcher que l'huile ne s'écoule à travers ledit filtre principal (10) vers ledit orifice auxiliaire ou de décharge (9) lorsque l'huile, dans la zone entre ledit filtre principal (10) et la soupape anti-cavitation (16) et à leur proximité, est à une pression supérieure à une valeur de seuil de pression de soupape anti-cavitation (P_{vac}) et de sorte à permettre à l'huile de le traverser depuis ledit orifice auxiliaire ou de décharge (9) vers ledit orifice de sortie (8) lorsque l'huile est à une pression inférieure à ladite valeur de seuil de pression de soupape anti-cavitation (P_{vac}), dans la même position.

12. Dispositif (1) selon la revendication 11, dans lequel :
- ladite soupape anti-cavitation (16) comprend un piston anti-cavitation (49) qui est mobile par rapport audit ensemble de soupape principale (11) indépendamment de ladite soupape de pressurisation (15), dans lequel les mouvements dudit piston anti-cavitation (49) sont déterminés par l'action de gravité et/ou la pression de ladite huile sur le piston anti-cavitation (49) et,
- ladite soupape de pressurisation (15) comprend un piston de pressurisation (42) coulissant à l'intérieur d'une chambre de pressurisation (43) qui est disposée de manière fluidique entre ledit filtre principal (10) et ledit orifice auxiliaire ou de décharge (9), et des moyens élastiques (44) adaptés pour amener ledit piston de pressurisation (42) dans une position permettant d'empêcher que l'huile ne passe à travers ledit filtre principal (10) et ledit orifice auxiliaire ou de décharge (9) et dans lequel ledit piston anti-cavitation (49) est sensiblement co-axial avec ledit piston de pressurisation (42) et avec ledit canal d'acheminement (31) et,
- lesdites soupapes de dérivation (12) comprennent des pistons de dérivation (38) coulissant à l'intérieur des chambres de dérivation (39) qui sont disposés de manière fluide entre ledit orifice d'entrée (7) et lesdits orifices de dérivation (17) et des moyens élastiques (40) adaptés pour amener lesdits pistons de dérivation (38) dans une position permettant d'empêcher l'huile de passer à travers ledit orifice d'entrée (7) et lesdits orifices de dérivation (17).

13. Dispositif (1) selon la revendication 11, dans lequel :
- ladite valeur de seuil de pression de soupape de pressurisation (Pᵥₚ) est égale à 0,5 bar + 10 % environ et
- ladite valeur de seuil de pression de soupape anti-cavitation (P_{vac}) est égale à 0,5 bar -10 % environ et
- ladite valeur de seuil de pression de soupape de dérivation (P_{vbp}) est égale à 2,5 bars environ.

14. Dispositif (1) selon la revendication 1, comprenant un filtre secondaire (54) qui est disposé de manière fluidique entre ledit ensemble de soupape principale (11) et ledit orifice auxiliaire ou de décharge (9).

15. Dispositif (1) selon la revendication 14, dans lequel ledit filtre secondaire (54) est disposé sur un côté inférieur (18) dudit dispositif (1) et logé à l'intérieur d'une chambre secondaire (55) définie par un logement secondaire (56) distinct dudit logement (20) logeant le filtre principal (10) et relié audit logement (20), dans lequel ledit filtre secondaire (54) comprend un corps de support (58) définissant un canal traversant (60) pour acheminer l'huile, qu'elle soit filtrée ou à filtrer, ledit canal d'acheminement (60) se développant le long d'un axe de développement de canal secondaire (CS) qui coïncide sensiblement avec ledit axe de développement de canal (C) et dans lequel ledit corps de support (58) comprend une pluralité de trous (61) permettant à l'huile de traverser et est enveloppé par une couche de matériau de filtrage (59) pour filtrer l'huile.
